# EUROPÄISCHE PATENTSCHRIFT

(11) **EP 2 791 371 B1**
(45) Veröffentlichungstag und Bekanntmachung des Hinweises auf die Patenterteilung: **03.02.2016**
(21) Anmeldenummer: 12815618.9
(22) Anmeldetag: 16.11.2012
(51) Int. Cl.: C21C 5/40, F27D 17/00

(54) **KONVERTERGASABFÜHRUNG**
CONVERTER GAS DISCHARGE
ÉVACUATION DU GAZ DE CONVERTISSEUR

(30) Priorität: 13.12.2011 DE 102011121677
(43) Veröffentlichungstag der Anmeldung: 22.10.2014
(73) Patentinhaber: SMS group GmbH, 40237 Düsseldorf (DE)
(72) Erfinder: GREVENSTEIN, Ralf, 40476 Düsseldorf (DE); FUSEK, Ralf, 47475 Kamp-Lintfort (DE); ESTER, Helmut, 122018 Gurgaon (IN)
(74) Vertreter: Klüppel, Walter
(86) Internationale Anmeldenummer: PCT/DE2012/001134
(87) Internationale Veröffentlichungsnummer: WO 2013/087050

(56) Entgegenhaltungen:
- DE-A1- 1 783 031
- DE-A1- 19 758 141
- JP-A- 2007 302 932
- JP-U- S4 998 402
- US-A- 3 854 709

## Beschreibung

Die Erfindung betrifft Konvertergasabführung gemäß dem Oberbegriff des Anspruchs 1. Eine Konverteranlage dieser Art ist aus der DE 197 58 141 A1 bekannt.

Bei der Konverterstahlerzeugung entsteht bei der Reaktion von Kohlenstoff und Sauerstoff ein CO-haltiges Abgas. Eine Konvertergasgewinnungsanlage kann diese heißen CO-Gase über einen wassergekühlten Kamin (Kühlkamin) mittels eines Gebläses absaugen, reinigen und in einen Gasbehälter fördern bzw. für weitere Zwecke speichern.

Um den Ertrag an CO-Gas hoch zu halten, muss die Menge an angesaugter Falschluft im System gering bleiben bzw. die Anlage nahezu gasdicht sein, da ansonsten das CO-Gas mit der Falschluft reagiert und verbrennt.

Eine wichtige Dichtungsstelle des Systems ist die Anbindung des Kühlkamins an den Konverter. Auf der einen Seite soll der Spalt zwischen Kühlkamin und Konverter so gering wie möglich sein, um den Lufteintritt ins System zu minimieren.

Auf der anderen Seite muss gewährleistet sein, dass der Konverter zum Befüllen und Entleeren gedreht werden kann. Die Drehung des Konverters darf daher nicht durch den Kühlkamin behindert werden.

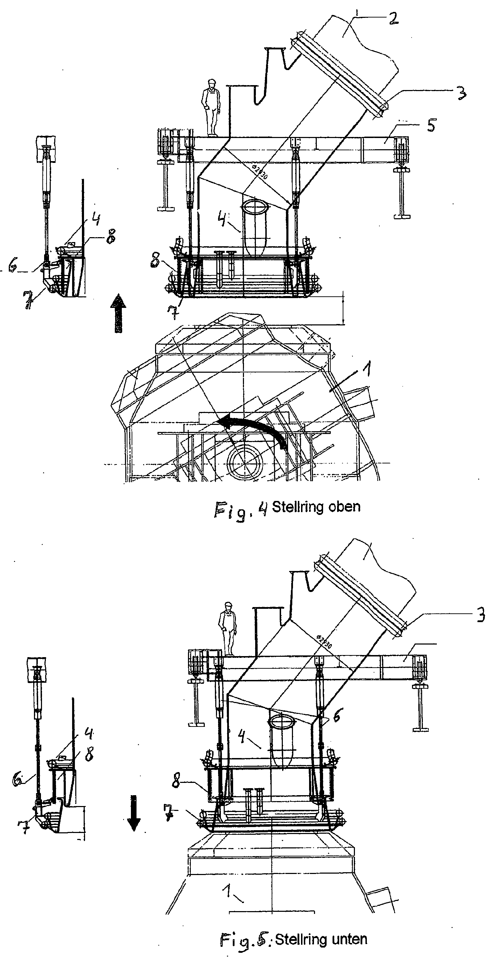

Um die genannten Bedingungen zu erfüllen, besteht - nach einem aus der Praxis bekannten System - ein wassergekühlter Kamin - wie die Figur 4 zeigt - aus einem festen Kühlkaminoberteil 2 und einer Kühlkaminhaube 4 direkt über dem Konvertergefäß 1, die am Oberteil verschraubt ist. Am Unterteil der Haube 4 ist wiederum ein Kühlring 8 befestigt, an dem der so genannte Stellring 7 vertikal außen verfährt. Die beiden Ringe bilden eine Art Labyrinthdichtung, die das Ansaugen von Falschluft mindert. Der Stellring 7 ist mit Zylindern 6 an dem Haubenwagen 5 befestigt und kann über eine Hydraulik seitlich an dem Kühlring 8 hoch und runter gefahren werden. Diese Stellringtechnik gewährleistet die Regulierung des Spaltes zwischen Konvertermund und Unterhaube.

Bei hochgefahrenem Stellring 7 ist es möglich den Konverter 1 zum Chargieren und Entleeren zu drehen. In der unteren Position liegt der Stellring 7 auf dem Konverter 1 auf und es kann keine zusätzliche Falschluft angesaugt werden (siehe Fig. 5).

Des weiteren muss der Konverter 1 zu Wartungszwecken von oben zugänglich sein. Bei den heutigen Anlagen gibt es Kühlkaminhauben die auf einem Wagen 5 gelagert sind und nach der Trennung der Verbindung zum festen Kamin und den Medienversorgungsleitungen verfahren werden können (siehe Fig. 5).

Ein derartige Konstruktion mit einem Kühlring und einem Stellring hat in der Praxis eine Reihe von Nachteilen.

### 1 . Verschleiß durch extreme Bedingungen

Der Stellring und die Zylinder befinden sich direkt über dem Konvertermund und sind damit sehr hohen Temperaturen, Schmutz wie auch Schlackespritzern ausgesetzt. Diese extremen Bedingungen führen dazu, dass die Komponenten schneller verschleißen als die Haube und eher ausgetauscht werden müssen.

### 2. Aufwendige Konstruktion

Aufgrund der extremen Bedingungen müssen Stellring und Kühlring austauschbar sein. Der Stellring, Kühlring und die Zylinder wassergekühlt und benötigen einen eigenen Kühlkreislauf

### 3. Schwere Zugänglichkeit

Der Bereich des Stellrings und der Zylinder ist schwer zugänglich und kann nur bei abgeschalteten Konverter gewartet bzw. besichtigt werden.

### 4. Eingeschränkte Nutzung bei existierenden Anlagen

Der Stellring verfährt vertikal an dem unteren Teil der Haube. Es muss bei existierenden Anlagen daher gewährleistet sein, dass die Haubenform geändert werden kann ohne den Betrieb des Konverters zu beeinflussen. Darüber hinaus muss der Haubenwagen für die Aufhängung der Zylinder und die Begehungen zu den Bauteilen umkonstruiert werden.

Es ist gerade bei bestehenden Anlagen nicht möglich, die Steilringtechnik für eine CO - Gasgewinnung nachzurüsten ohne enorme Modifizierungen an dem Konverterbetrieb vorzunehmen.

### 5. Aufwendige Wartung

Bei derzeitigen Anlagen erhöht sich die Wartungszeit des Konverters durch die Demontagevorbereitungen der Haube. Die Schraubverbindungen von Kamin-Haube und die Flanschverbindungen der Kühlwasserleitungen müssen getrennt werden, um die Haube seitlich zu verfahren und den Konverter von oben zugänglich zu machen.

Aus der JP S4998402 U 24 sowie der DE 17 83 031 A1 sind verschieb- und verfahrbare Hauben bekannt, wobei aber beispielsweise der Schnitt zwischen Haube und Kamin bei der JP S4998402 U 24 vertikal ist, so dass beim Heben sofort Falschluft eingesaugt werden würde und eine Abdichtung während dem Heben nicht möglich ist.

Eine Stellringlösung ist schließlich noch aus der JP 2007 302932 A bekannt, die aber keine seitliche Verschiebung zulässt.

Aufgabe der Erfindung ist es daher, die Konvertergasabführung so zu gestalten, dass eine Verschleißminimierung möglich ist -,
- weniger wassergekühlte Bauteile vorhanden sind,
- eine gute Zugänglichkeit und Wartungsmöglichkeiten der Hydraulikzylinder gewährleistet ist und
- eine kürzere Vorlaufzeit für die Konverterwartung sowie
- eine einfache Umrüstung für existierende Anlagen möglich ist.

Gelöst wird diese Aufgabe erfindungsgemäß mit einer Konvertergasabführung für einen dreh - und schwenkbaren Blasstahl - Konverter, mit einer Kühlkaminhaube zwischen Konverter und feststehenden Kühlkaminoberteil für die Konvertergasabführung zu einer Gasgewinnungsanlage, wobei die Kühlkaminhaube während des Betriebes des Konverters dichtend auf dem oberen Rand des Konverters aufliegt,
wobei die Kühlkaminhaube relativ zum feststehenden Kühlkaminoberteil heb - und senkbar ist, um in einer oberen Position einen ausreichend großer Spalt zwischen Konverterrand und Kühlkaminhaube freizulassen, der eine Dreh- und Schwenkbewegung des Konverters zulässt, während die Kühlkaminhaube in einer unteren Position mit ihrem dem Konverter zugekehrten Rand, dichtend am Rand des aufrechtstehenden Konverters anliegt,
und die Kühlkaminhaube in eine weitere Position absenkbar ist, in der sie gegenüber dem feststehenden Kühlkaminoberteil seitlich verschiebbar ist,
dadurch gekennzeichnet,
- dass im Bereich des Übergang von der Kühlkaminhaube zum feststehenden Kühlkaminoberteil, eine die vertikale Verschiebung zwischen Kühlkaminhaube und Kühlkaminoberteil zulassende Abdichtung vorgesehen ist,
- dass die gesamte Kühlkaminhaube mittels Hydraulikzylinder relativ zum Kühlkaminoberteil vertikal verschiebbar.ist und
- dass die Hydraulikzylinder für die Kühlkaminhaube auf einem Haubenwagen aufgeständert sind, mit dem die Kühlkaminhaube horizontal relativ zum Konverter und dem feststehenden Kühlkaminoberteil verfahrbar ist.

Dabei ist die Abdichtung zwischen der Kühlkaminhaube und dem feststehenden Kühlkaminoberteil als Labyrinthdichtung ausgebildet.

Weiterhin kann eine zusätzliche Führung für die Kaminhaube am Haubenwagen vorgesehen sein, die verhindert, dass die Kühlkaminhaube kippt.

Bei der erfindungsgemäßen Konvertergasabführung bildet eine höhenregulierbare Haube die Schnittstelle zwischen Konvertergefäß und dem Kühlkamin. Sie ermöglicht die Haube während der Gasgewinnung herunterzufahren und auf den Konverter aufzusetzen. Die Haube verfährt dabei vertikal in der Labyrinthdichtung am feststehenden Kühlkaminoberteil, um den Verfahrweg auszugleichen, als auch die Menge an angesaugter Falschluft im Abgas zu reduzieren bzw. den Ertrag an gewonnen CO-Gas zu erhöhen.

Des weiteren kann die Haube in der Labyrinthdichtung nach oben verfahren, um die Drehung des Konvertergefäßes zum Befüllen oder Entleeren nicht zu behindern.

Erfindungsgemäß wird also die gesamte Haube über Hydraulikzylinder im Kühlkaminoberteil vertikal verfahren. Die Abdichtung erfolgt dadurch an dem weniger beanspruchten Kühlkaminoberteil, während bei den bekannten Konstruktionen mit einem Stellring diese an dem stark beanspruchten Haubenunterteil vorgesehen ist.

Die Erfindung soll nachfolgend mit Bezug auf die Zeichnungen an einem Ausführungsbeispiel erläutert werden.

Dabei zeigt:
- Fig. 1 bis 3: die erfindungsgemäße Konvertergasabführung in verschiedenen Positionen

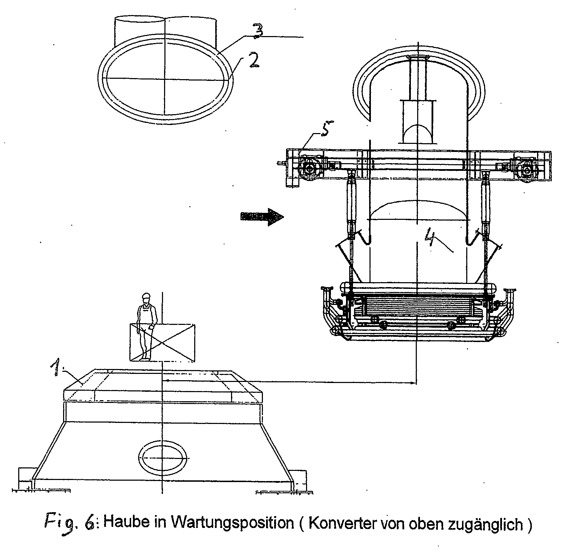

- Fig. 4 bis 6: eine bekannte Konvertergasabführung, ebenfalls in verschiedenen Positionen.

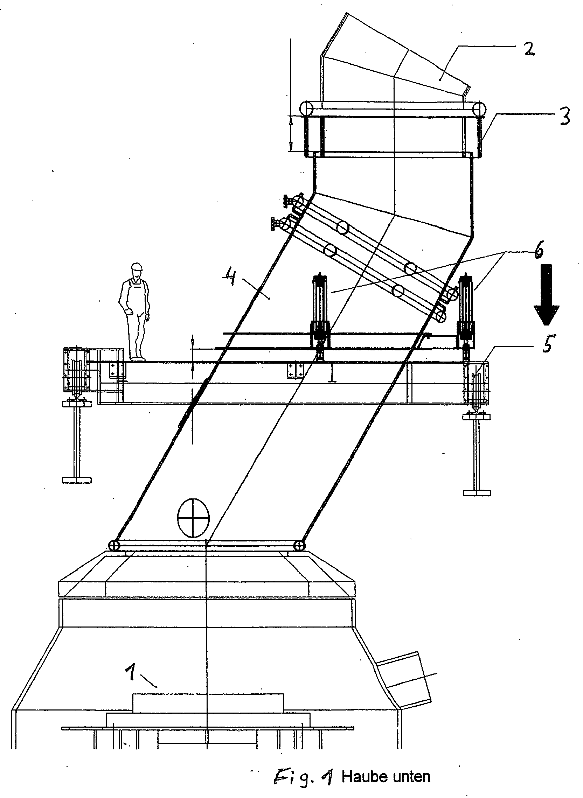

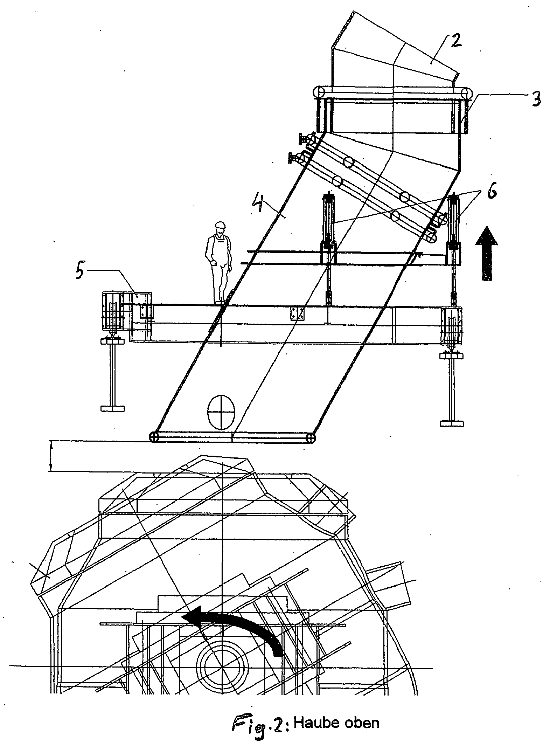

Die Idee des neuen Konzeptes für eine Gaskühlungsanfage eines Konvertergasgewinnungssystems ist es, die gesamte Kühlkaminhaube höhenverstellbar zu gestalten und den beschriebenen Stellring zu ersetzen. In Figur 1 bis 3 ist die neue Lösung dargestellt.

Die Kühlkaminhaube 4 wird durch Hydraulikzylinder 6 auf dem Haubenwagen 5 aufgeständert und kann vertikal verfahren werden. Eine zusätzliche Führung gibt dem System den nötigen Halt und verhindert, dass die Haube kippt. Zudem muss der untere Bereich des feststehenden Kühlkaminoberteils 2 eine Abdichtung mit dem oberen Teil der Kühlkaminhaube 4 bilden. Hier wird ebenfalls eine Labyrinthdichtung 3 genutzt in der die Kühlkaminhaube 4 auf und ab fährt. Ein Stickstoffschleier innerhalb des Labyrinths verhindert zusätzlich den Eintritt von Falschluft.

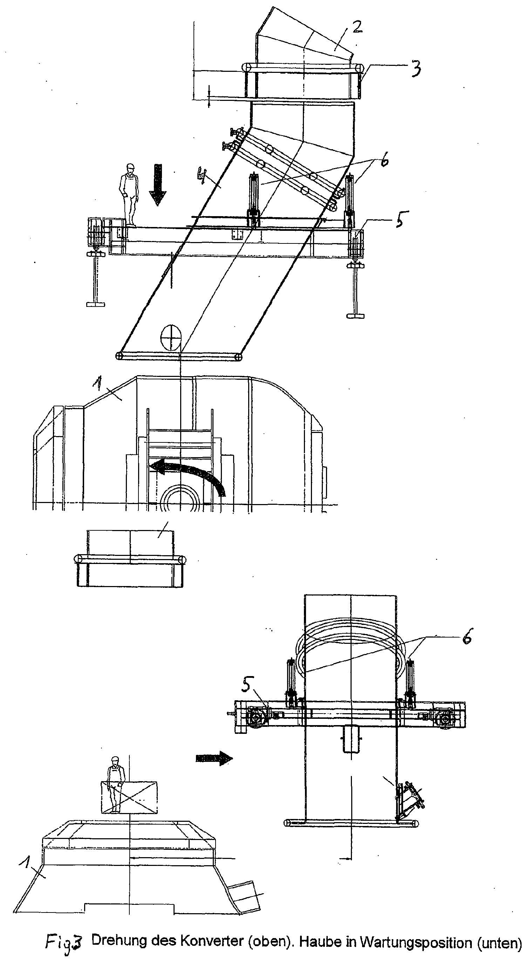

Die Kühlkaminhaube 4 kann in die Wartungsposition gefahren werden, indem der Konverter um 90° dreht, die Kühlkaminhaube 4 aus der Labyrinthdichtung 3 herabgelassen wird und mit Hilfe des Haubenwagens 5 seitlich verfährt. (siehe Figur 3).

### Vorteile des neuen Systems

### 1 . Verschleißminimierung

Durch die Verlagerung der Labyrinthdichtung und Hydraulikzylinder sind die Bauteile niedrigeren Temperaturen ausgesetzt. Durch eine saubere Umgebung wird ebenfalls der Verschleiß des Materials minimiert, Die Teile unterliegen nicht mehr den extremen Bedingungen direkt über dem Konvertermund und die Lebensdauer der Komponenten erhöht sich.

### 2. Reduzierung der wassergekühlten Bauteile

Im Vergleich zu der Stellringtechnik spart man den Stellring und den Kühlring. Man benötigt folglich keine weiteren Wasserkühlkreisläufe bzw. Bauteile für die Abdichtung des Systems.

### 3. Bessere Wartungsmöglichkeit

Die Zylinder, die Führung der Haube und die Labyrinthdichtung liegen auf bzw. über dem Haubenwagen und sind leichter für Personal zur Wartung zugänglich.

### 4. Reduzierung der Wartungszeit

Die Haube kann durch die Hydraulik leicht herabgelassen werden und in die Wartungsposition verfahren. Es ist kein zeitaufwendige Trennung von Verbindungen zum Kühlkaminoberteil und den Medienleitungen notwendig. Aus diesem Grund reduziert sich die Wartungszeit und der Konverter kann schneller Stahl weiter produzieren.

## Patentansprüche

1. Konvertergasabführung für einen dreh - und schwenkbaren Blasstahl - Konverter, mit einer Kühlkaminhaube (4) zwischen Konverter (1) und feststehenden Kühlkaminoberteil (2) für die Konvertergasabführung zu einer Gasgewinnungsanlage, wobei die Kühlkaminhaube (4) während des Betriebes des Konverters dichtend auf dem oberen Rand des Konverters (1) aufliegt,
wobei die Kühlkaminhaube (4) relativ zum feststehenden Kühlkaminoberteil (2) heb - und senkbar ist, um in einer oberen Position einen ausreichend großer Spalt zwischen Konverterrand und Kühlkaminhaube freizulassen, der eine Dreh- und Schwenkbewegung des Konverters (1) zulässt, während die Kühlkaminhaube (4) in einer unteren Position mit ihrem dem Konverter zugekehrten Rand, dichtend am Rand des aufrechtstehenden Konverters anliegt,
und die Kühlkaminhaube (4) in eine weitere Position absenkbar ist, in der sie gegenüber dem feststehenden Kühlkaminoberteil (2) seitlich verschiebbar ist,
**dadurch gekennzeichnet,**
- **dass** im Bereich des Übergang von der Kühlkaminhaube (4) zum feststehenden Kühlkaminoberteil (2), eine die vertikale Verschiebung zwischen Kühlkaminhaube und Kühlkaminoberteil zulassende Abdichtung (3) vorgesehen ist,
- **dass** die gesamte Kühlkaminhaube (4) mittels Hydraulikzylinder (6) relativ zum Kühlkaminoberteil (2) vertikal verschiebbar.ist und
- **dass** die Hydraulikzylinder (6) für die Kühlkaminhaube (4) auf einem Haubenwagen (5) aufgeständert sind, mit dem die Kühlkaminhaube (4) horizontal relativ zum Konverter (1) und dem feststehenden Kühlkaminoberteil (2) verfahrbar ist

2. Konvertergasabführung nach Anspruch 1,
**dadurch gekennzeichnet,**
**dass** die Abdichtung (3) zwischen der Kühlkaminhaube (4) und dem feststehenden Kühlkaminoberteil (2) als Labyrinthdichtung ausgebildet ist.

3. Konvertergasabführung nach einem der vorstehenden Ansprüche,
**dadurch gekennzeichnet,**
**dass** eine zusätzliche Führung für die Kühlkaminhaube am Haubenwagen (5) vorgesehen ist, die verhindert, dass die Kühlkaminhaube während des Verfahrens kippt.

4. Konvertergasabführung nach einem der vorstehenden Ansprüche,
**dadurch gekennzeichnet,**
**dass** ein Stickstoffschleier innerhalb der Labyrinthabdichtung ausbildbar ist, um den Eintritt von Falschluft zu unterbinden.

## Claims

1. Converter gas discharge for a rotary and pivotable basic oxygen steel converter, with a cooling flue hood (4) between converter (1) and stationary cooling flue upper part (2) for converter gas discharge to a gas recovery plant, wherein the cooling flue hood (4) during operation of the converter sealingly rests on the upper edge of the converter (1), wherein the cooling flue hood (4) is raisable and lowerable relative to the stationary cooling flue upper part (2) so as to free, in an upper position, a sufficiently large gap between converter edge and cooling flue hood to permit rotational and pivotable movement of the converter (1), whereas the cooling flue hood (4) in a lower position sealingly rests, by its edge facing the converter, on the edge of the upright converter,
and the cooling flue hood (4) is lowerable into a further position in which it is laterally displaceable relative to the stationary cooling flue upper part (2),
**characterised in that**
- a seal (3) permitting vertical displacement between cooling flue hood and cooling flue upper part is provided in the region of the transition from the cooling flue hood (4) to the stationary cooling flue upper part (2),
- the entire cooling flue hood (4) is vertically displaceable relative to the cooling flue upper part (2) by means of hydraulic cylinders (6) and
- the hydraulic cylinders (6) for the cooling flue hood (4) are placed upright on a hood carriage (5) by which the cooling flue hood (4) is movable horizontally relative to the converter (1) and the stationary cooling flue upper part (2).

2. Converter gas discharge according to claim 1, **characterised in that** the seal (3) between the cooling flue hood (4) and the stationary cooling flue upper part (2) is formed as a labyrinth seal.

3. Converter gas discharge according to one of the preceding claims, **characterised in that** an additional guide preventing tipping of the cooling flue hood during the movement is provided for the cooling flue hood at the hood carriage (5).

4. Converter gas discharge according to any one of the preceding claims, **characterised in that** a nitrogen atmosphere can be formed within the labyrinth seal to preclude entry of leakage air.

## Revendications

1. Evacuation des gaz d'un convertisseur pour un convertisseur rotatif et pivotant pour de l'acier soufflé à l'oxygène pur, comprenant une mitre de cheminée de refroidissement des gaz (4) entre le convertisseur (1) et la partie supérieure fixe (2) de la cheminée de refroidissement des gaz pour l'évacuation des gaz du convertisseur en direction d'une installation de récupération des gaz, la mitre de la cheminée de refroidissement des gaz (4) s'appuyant, au cours de la mise en service du convertisseur, de manière étanche sur le bord supérieur du convertisseur (1), dans laquelle la mitre de la cheminée de refroidissement des gaz (4) peut se soulever et s'abaisser par rapport à la partie supérieure fixe (2) de la cheminée de refroidissement des gaz, afin de, dans une position supérieure, libérer un espace libre suffisamment grand entre le bord du convertisseur et la mitre de la cheminée de refroidissement des gaz qui permet un mouvement rotatif et pivotant du convertisseur (1), tandis que la mitre de la cheminée de refroidissement des gaz (4), dans une position inférieure, vient se disposer avec son bord tourné vers le convertisseur en étanchéité contre le bord du convertisseur dressé, et la mitre de la cheminée de refroidissement des gaz (4) peut s'abaisser dans une autre position dans laquelle elle peut se déplacer latéralement par rapport à la partie supérieure fixe (2) de la cheminée de refroidissement des gaz, **caractérisée**
- **en ce que** dans la zone de la transition entre la mitre de la cheminée de refroidissement des gaz (4) et la partie supérieure fixe (2) de la cheminée de refroidissement des gaz, on prévoit un joint d'étanchéité (3) qui permet le déplacement vertical entre la mitre de la cheminée de refroidissement des gaz et la partie supérieure de la cheminée de refroidissement des gaz ;
- **en ce que** la mitre de la cheminée de refroidissement des gaz (4) dans son ensemble peut se déplacer en direction verticale au moyen de cylindres hydrauliques (6) par rapport à la partie supérieure (2) de la cheminée de refroidissement des gaz ; et
- **en ce que** les cylindres hydrauliques (6) pour la mitre de la cheminée de refroidissement des gaz (4) sont disposés en surélévation sur un wagon à capot (5) avec lequel la mitre de cheminée de refroidissement des gaz (4) peut se déplacer à l'horizontale par rapport au convertisseur (1) et par rapport à la partie supérieure fixe (2) de la cheminée de refroidissement des gaz.

2. Evacuation des gaz d'un convertisseur selon la revendication 1, **caractérisée en ce que** le joint d'étanchéité (3) entre la mitre de la cheminée de refroidissement des gaz (4) et la partie supérieure fixe (2) de la cheminée de refroidissement des gaz est réalisée sous la forme d'un joint d'étanchéité en labyrinthe.

3. Evacuation des gaz d'un convertisseur selon l'une quelconque des revendications précédentes, **caractérisée en ce que** l'on prévoit un guidage supplémentaire pour la mitre de la cheminée de refroidissement des gaz contre le wagon à capot (5), qui empêche le basculement de la mitre de la cheminée de refroidissement des gaz au cours du transport.

4. Evacuation des gaz d'un convertisseur selon l'une quelconque des revendications précédentes, **caractérisée en ce qu'**on peut monter un voile pour l'azote à l'intérieur du joint d'étanchéité en labyrinthe pour empêcher l'entrée d'air parasite.
